Europäisches Patentamt

European Patent Office

Office européen des brevets

(19)

(11) Publication number: **0 024 369**
**B1**

(12) **EUROPEAN PATENT SPECIFICATION**

(45) Date of publication of patent specification: **12.10.83**

(51) Int. Cl.³: **H 01 G 9/04**

(21) Application number: **80200771.6**

(22) Date of filing: **18.08.80**

(54) Method of heating cathode foil for electrolytic capacitors.

(30) Priority: **21.08.79 NL 7906316**

(43) Date of publication of application:
**04.03.81 Bulletin 81/9**

(45) Publication of the grant of the patent:
**12.10.83 Bulletin 83/41**

(84) Designated Contracting States:
**CH DE FR GB LI NL**

(56) References cited:
**FR - A - 2 408 203**
**GB - A - 1 200 089**
**GB - A - 2 008 324**

(73) Proprietor: **N.V. Philips' Gloeilampenfabrieken**
**Groenewoudseweg 1**
**NL-5621 BA Eindhoven (NL)**

(72) Inventor: **Knol, Berend**
**c/o INT. OCTROOIBUREAU B.V. Prof. Holstlaan 6**
**NL- 5656 AA Eindhoven (NL)**
Inventor: **Slakhorst, Justinus W.H.G.**
**c/o INT. OCTROOIBUREAU B.V. Prof. Holstlaan 6**
**NL-5656 AA Eindhoven (NL)**

(74) Representative: **Jelmorini, Pius Antonius et al,**
**INTERNATIONAAL OCTROOIBUREAU B.V. Prof.**
**Holstlaan 6**
**NL-5656 AA Eindhoven (NL)**

## Method of heating cathode foil for electrolytic capacitors

The invention relates to a method of heating cathode foil for electrolytic capacitors and to electrolytic capacitors having cathode foils treated by such a method.

An electrolytic capacitor having aluminium electrodes consists of an aluminium anode provided by means of anodic oxidation with a dielectric aluminium oxide skin, an aluminium cathode which has been etched so as to produce an enlarged effective surface, and an electrolyte solution. The most usual form of such an electrolytic capacitor is the aluminium wound capacitor, wherein the anode foil and the cathode foil are rolled with an interleaved, so-called separator consisting of an electrically insulating material into a wound body. The wound body is impregnated with an electrolytic solution and is encapsulated.

It is important in an electrolytic capacitor to have the desired capacitance using as small an area of electrode foils, as possible, which means that the effective surface of the metal to be anodically oxidised (formed) must be as large as possible. Before the anodic oxidation of the anode foil, this foil is etched, usually electrolytically, so as to enlarge the effective surface of the foil. To obtain a large capacitance per unit area of the foils, it is important that the effective surface area of the cathode foil which is encapsulated in the non-formed state in normal capacitors is likewise increased by etching in such a way that roughening and capacitance respectively are comparable to the roughening and capacitance of the anode foil. In this way it is achieved that the total capacitance of the capacitor is determined to an increased extent by the anode capacitance alone, in accordance as the cathode capacitance increases.

British patent application 2008324, which has been laid open to public inspection, discloses such a cathode foil, which consists of aluminium having a copper content between 0.15 and 5.7% by weight, and a total quantity of not more than 2% by weight of other minor constituents. Cathode foil consisting of aluminium having a manganese content between 0.2 and 2% by weight and a copper content between 0.15 and 5.3% by weight is described in the European patent application publication 0000965-A, which has been laid open to public inspection. After etching, these two kinds of foils have a higher capacitance value than previously known cathode foils.

From an article by L. van Alphen *et al* in the "Zeitschrift für Metallkunde" *70*, 158—169 (1979), it appears that an annealing operation after rolling must satisfy very specific requirements in order to have a favourable influence on the capacitive properties and the strength of the foil.

From this article it appears that foil having a copper content of 1.5% by weight or more has, after etching in the non-annealed condition as well as after annealing followed by the slow cooling, customary in the technology, prior to etching, a low impact strength. A high impact strength is, however, important in view of the mechanical load to which the foil is subjected during unwinding and winding and during the etching operation.

It appeared, however, that this phenomenon also applies to foil having a copper content of less than 1.5% by weight.

The invention has for its object to increase this impact strength while retaining the other properties of the foil after etching.

According to the invention, the method of treating cathode foil for electrolytic capacitors the foil consisting of aluminium having a copper content between 0.15 and 5.7% by weight, a manganese content from 0 to 2% by weight and a total quantity of contaminations of not more than 2% by weight, this foil being subjected to a heat treatment prior to etching, is characterized in that the foil is heat-treated at a temperature of at least 300°C the heat treatment temperature increasing in relation to an increase in the copper content within the specified range and cooled thereafter at a rate of at least 50°C/min to below a temperature of 175°C by unwinding the foil between air knives.

It was surprisingly found that working of the foil does not only give it a higher impact strength, but that, furthermore, a not inconsiderable gain in capacitance is obtained after etching of the foil.

The temperature at which the heat treatment must be effected depends on the copper content of the foil. A temperature of 300°C is used for foil having a Cu-content of 0,15—0,5%, 400°C for foil having a Cu-content of 1,5% and 550°C for foil having a Cu-content of 5%. During the subsequent unwinding of the foil between air knives phase separation must be prevented. Cooling must be effected at at least the abovementioned minimum rate, in any case to below a temperature of 175°C. Below this temperature the cooling rate is no longer critical. Cooling between air knives, between which the foil is unwound after the heat treatment in wound position, is effected by directing rapdily flowing cold air to the top and bottom surfaces of the foil by two or more gaps of the same width as the foil width which are arranged at an angle with respect to the foil.

Quenching in water is not suitable for this purpose as, at the temperatures suitable for the heat treatment since water reacts with the aluminium, a type of oxide then being formed which unfavourably affects the capacitance. An alternative possibility is quenching in oil; this method is, however, also less attractive in practice as it requires an additional degreasing operation.

The invention will now be further described by way of non-limitative example, with reference to the following Examples.

Example 1

Aluminium foil, 60 μm thick and having the following composition in percent by weight:

Cu 3.6
Fe 0.22
Ti 0.015
Mg 0.04
Mn 0.39
Si 0.068

Al remainder, is heated at a temperature of 550°C for $\frac{1}{2}$ hour and thereafter cooled by unwinding the foil in flowing air at a rate of 500°C/min.

The foil is electrolytically etched in an aqueous solution of 250 g/l NaCl with an electric charge of 12 Coul/cm². Thereafter the foil has a capacitance of 410 μF/cm².

If cooling is done in an oven, that is to say from 500°C to 25°C in a period of 4 hours, the foil has, after etching in the same conditions, a capacitance of only 70 μF/cm².

Example 2

Aluminium foil, 30 μm thick and having a Cu-content of 1.20% by weight and a total content of other minor constituents of 0.5% by weight, is heated at 450°C for $\frac{1}{2}$ hour and cooled in an oven at a rate of 250°C/hour. At a temperature $T_x$, a sample is taken each time from the batch in the oven and cooled at a rate of 500°C/min to ambient temperature.

The impact strength after etching of all these samples was measured. Table I shows the results.

TABLE I

| $T_x$ (°C) | impact strength (mJ/15 mm foil width) |
|---|---|
| 450 | 100 |
| 400 | 80 |
| 350 | 80 |
| 325 | 90 |
| 300 | 20 |
| 275 | 10 |

Table I shows that phase separation takes place between 325 and 300°C and that for this foil the heat treatment must be effected above this temperature in order to obtain the effect of the invention by quenching.

In a similar test, the entire batch is heated at 450°C for $\frac{1}{2}$ hour and thereafter cooled to room temperature at a rate of 500°C/min. Thereafter a sample is heated each time for 10 minutes at a temperature $T_y$, cooled at the same rate to ambient temperature, the impact strength and the capacitance are measured, both values after anodic etching with a charge of 1000 Coulombs/dm² in a 250 g/l NaCl solution.

Table II shows the results. The capacitance of the foil which was not subjected to reheating and quenching was 225 μF/cm² and the impact strength was 100 mJ for a 15 mm wide strip of foil.

TABLE II

| $T_y$ (°C) | impact strength (mJ/15 mm foil width) | capacitance μF/cm² |
|---|---|---|
| 350 | 50 | * |
| 325 | 5 | 175 |
| 300 | 5 | * |
| 275 | 5 | 150 |
| 250 | 5 | * |
| 225 | 5 | * |
| 200 | 15 | * |

*=not determined

**Claims**

1. A method of treating cathode foil for electrolytic capacitors, the foil consisting of aluminium having a copper content between 0.15 and 5.7% by weight, a manganese content from 0 to 2% by weight and a total quantity of not more than 2% by weight of other minor constituents, the foil being subjected to a heat treatment prior to etching, characterized in that a roll of the wound foil is heat treated at a temperature of at least 300°C, the heat treatment temperature increasing in relation to an increase in the copper content within the specified range, and is thereafter cooled at a rate of at least 50°C/min. to below a temperature of 175°C by unwinding the foil between air knives.

2. An electrolytic foil capacitor the cathode foil being treated in a manner as claimed in claim 1.

**Revendications**

1. Procédé pour traiter une feuille de cathode pour des condensateurs électrolytiques, la feuille étant constituée par de l'aluminium présentant une teneur en cuivre comprise entre 0,15 et 5,7% en poids, une teneur en manganèse comprise entre 0 et 2% en poids et une quantité totale d'impuretés non supérieure à 2% en poids d'autres petits composants, cette feuille étant soumise à un traitement thermique avant de décapage, caractérisé en ce que la feuille est traitée thermiquement à une température d'au moins 300°C, la température de traitement thermique augmentant en relation avec une augmentation de la teneur en cuivre dans la gamme spécifique et est refroidie ensuite à une vitesse d'au moins 50°C/min jusqu'au-dessous d'une température de 175°C par déroulement de la feuille entre des couteaux pneumatiques.

2. Condensateur à feuille électrolytique, la feuille de cathode étant traitée d'une façon décrite selon la revendication 1.

**Patentansprüche**

1. Verfahren zum Behandeln von Kathodenfolie für Elektrolytkondensatoren, wobei die Folie aus Aluminium mit einem Kupfergehalt zwischen 0,15 und 5,7 Gew.%, einem Mangangehalt von 0 bis 2 Gew.% und einer Gesamtmenge anderer geringerer Bestandteile von weniger als 2 Gew.% besteht und wobei die Folie vor dem Aetzen einer Wärmebehandlung ausgesetzt wird, dadurch gekennzeichnet, dass eine Rolle aufgewickelter Folie bei einer Temperatur von wenigstens 300° behandelt wird, wobei die Temperatur umso höher gewählt wird, je grösser der Kupfergehalt innerhalb des genannten Bereiches ist, und dass die Rolle danach mit einer Geschwindigkeit von 50°C/Minute auf eine Temperatur von 175°C abgekühlt wird, indem die Folie zwischen sogenannten "Luftmessern" abgewickelt wird.

2. Elektrolytfolienkondensator, dadurch gekennzeichnet, dass die Kathodenfolie auf die Art und Weise nach Anspruch 1 behandelt worden ist.